# EUROPÄISCHE PATENTSCHRIFT

(11) **EP 2 323 950 B1**
(45) Veröffentlichungstag und Bekanntmachung des Hinweises auf die Patenterteilung: **28.03.2018**
(21) Anmeldenummer: 09782350.4
(22) Anmeldetag: 28.08.2009
(51) Int. Cl.: C01B 35/02

(54) **VERFAHREN ZUR REINIGUNG VON ELEMENTAREM BOR**
METHOD FOR PURIFYING ELEMENTARY BORON
PROCÉDÉ DE PURIFICATION DE BORE ÉLÉMENTAIRE

(30) Priorität: 05.09.2008 DE 102008045858
(43) Veröffentlichungstag der Anmeldung: 25.05.2011
(73) Patentinhaber: H.C. Starck Surface Technology and Ceramic Powders GmbH, 80339 München (DE)
(72) Erfinder: KARAU, Friedrich Wilhelm, 38640 Goslar (DE)
(74) Vertreter: Grunert, Jens
(86) Internationale Anmeldenummer: PCT/EP2009/061154
(87) Internationale Veröffentlichungsnummer: WO 2010/026111

(56) Entgegenhaltungen:
- GB-A- 1 064 093
- GB-A- 1 272 810
- US-A- 4 614 637

## Beschreibung

Durch gewisse Eigenschaften wie die hohe Enthalpie der Oxidbildung, niedriges Molekulargewicht und gute chemische Stabilität wird Bor in vielen Bereichen der Technik eingesetzt. Große Mengen an amorphem Bor werden als Additiv in pyrotechnischen Mischungen eingesetzt. In der chemischen Synthese ist Bor als Edukt zur Herstellung von Boriden im Einsatz sowie als Flussmittel beim Löten.

Seit Januar 2001 ist durch eine Entdeckung von Prof. Akimitsu (Nature, Vol. 410, No. 6824 (2001), 63-64.) in aller Munde: es wurde festgestellt, dass die altbekannte chemische Verbindung Magnesiumdiborid (MgB2) supraleitende Eigenschaften bei Temperaturen von unterhalb 40 Kelvin aufweist. Im Gegensatz zu so genannten cupratbasierten Supraleitern zeigt Magnesiumdiborid vorteilhafte Eigenschaften für den Einsatz als Supraleiter in Drähten und anderen Anwendungen (z.B. Sinterkörpern). Magnesiumdiborid wird üblicherweise durch Reaktion von feinverteilten Bor- und Magnesiumpulvern miteinander hergestellt.

Durch die Methode der Drahtherstellung (Einschließen des Magnesiumdiborids oder eines Gemisches aus elementarem Bor und Magnesium in eine Metallhülle und anschließendes Drahtziehen und ggf. einer nachfolgenden Wärmebehandlung zur Erreichung einer chemischen Reaktion von Bor und Magnesium zu Magnesiumdiborid im Falle einer verwendeten Mischung aus Magnesium und Bor (*in situ Verfahren*), um einen Metalldraht mit einer Magnesiumdiboridseele zu erhalten) werden verschiedene Anforderungen an das Magnesiumdiborid gestellt, welche bislang nicht erreicht werden konnten. Neben einem hohen Anteil an amorphem Bor sind eine hohe Reinheit, insbesondere ein geringer Gehalt an Sauerstoff, Stickstoff, anionischen Verunreinigungen wie Chlorid oder Fluorid, aber auch üblichen metallischen Verunreinigungen wie Alkali- und Erdalkalimetallionen sowie sonstigen Metallionen gefordert. Ebenso wird eine geringere Korngröße verlangt und die Abwesenheit von übergroßen Ehzelkörnern, da diese Einzelkörner zum Reißen des Drahtes beim Drahtziehen führen und Verunreinigungen eine geringere Stromtragfähigkeit zur Folge haben können. Des weiteren verhindern übergroße Einzelkörner ("Überkorn") die vollständige chemische Reaktion des Bors mit Magnesium zu Magnesiumdiborid bei den für die Drahtherstellung zugrundeliegenden Verfahren. Des weiteren wird die chemische Reaktivität des Bors durch eine Belegung der Oberfläche mit Boroxid und Boraten herabgesetzt, was sich in längerer Reaktionsdauer und den nötigen höheren Reaktionstemperaturen widerspiegelt. Dies ist insbesondere beim in situ Prozeß zur Supraleiterdrahtherstellung von Nachteil.
Herkömmliches, kommerziell erhältliches Bor wird üblicherweise durch Reduktion von Bortrioxid mit Magnesium erhalten, so dass für eine weitere Reinigung des handelsüblichen Bors Bedarf besteht, um eine weitere preiswerte Produktion zu ermöglichen. Das Patent US4614637 offenbart ein Verfahren zur Reinigung von Borpulver. Dieses Verfahren enthält eine Behandlung in einer alkalischen Lösung und zumindesten zwei thermische Behandlungen. Es wurde überraschend gefunden, dass eine einfache Möglichkeit zur Reinigung von pulverförmigem Bor mit einer niedrigen Korngröße durch saure Veresterung der Verunreinigungen mit anschließender Wärmebehandlung erzielt werden kann. Es wurde weiter überraschend gefunden, dass derart gereinigtes Bor sehr gut zur Herstellung von Magnesiumdiborid zur Herstellung supraleitender Drähte auch dann geeignet ist, wenn der Anteil kristallinen Bors am gesamten zur Herstellung von Magnesiumdiborid eingesetzten Bor bis zu 30% beträgt.
Die Erfindung betrifft daher ein Verfahren zur Reinigung von elementarem Bor enthaltend die folgenden Schritte:
- Bereitstellen von elementarem Bor;
- Mahlen des elementarem Bors in Gegenwart eines Alkohols, um eine erste Suspension zu erhalten;
- Versetzen der ersten Suspension mit einer im Alkohol löslichen starken Säure um eine zweite Suspension zu erhalten;
- Erhitzen der zweiten Suspension zum Sieden unter Rückflusskühlung, um eine dritte Suspension zu erhalten;
- Abtrennen des in der Suspension vorhandenen Feststoffes;
- Wärmebehandlung des Feststoffes unter vermindertem Druck.
Die vorteilhaften Ausführungsformen können den Patentansprüchen entnommen werden.
In dem Verfahren wird das Mahlen vorteilhaft in einem Attritor oder einer Rührwerkskugelmühle durchgeführt, da in diesen Vorrichtungen das Mahlen in einer Mahlflüssigkeit möglich ist und eine geringe Korngröße und die wirksame Zerkleinerung des Überkorns sowie eine enge, monomodale Partikelgrößenverteilung erreicht werden können. Vorzugsweise wird als Alkohol ein niederer Alkohol mit 1 bis 5 Kohlenstoffatomen verwendet, insbesondere Methanol. Die starke Säure und/oder der Alkohol sind besonders bevorzugt wasserfrei.
Als starke Säure geeignet sind insbesondere alle wasserfreien Säuren, wie gasförmiger Chlorwasserstoff oder Toluolsulfonsäure.

Im Allgemeinen kann für eine Zeit von etwa 1 bis 24 Stunden unter Rückfluß gekocht werden. Die optimale Dauer hängt vom Einzelfall ab und kann anhand einfacher orientierender Versuche ermittelt werden. Hierbei wird der vorhandene Sauerstoff, der in Form von Borsäure, Bortrioxid und dergleichen an der Oberfläche der Borpartikel vorhanden ist mit dem Alkohol verestert. Da es sich hierbei um eine Gleichgewichtsreaktion handelt sollte das Gleichgewicht in Richtung des Esters verschoben werden, was man durch verschiedene Maßnahmen erreichen kann. Zunächst wird der Alkohol im Überschuß eingesetzt. Hierzu kann man bestimmen, wie hoch der Sauerstoffgehalt üblicherweise ist, wobei hier festgestellt wurde dass das Bor maximal 2% Sauerstoff enthält. Das bedeutet, 1 kg Bor enthält ca. 20g Sauerstoff, entspricht 1,25 mol
Dies entspricht bei einem Sauerstoffgehalt von 2% 0,4165 mol Äquivalenten B₂O₃ entspricht 0,833 mol oxidisch vorliegendes Bor, wenn man annimmt, dass der gesamte Sauerstoff in Form von Bortrioxid vorliegt.

Die Veresterungsreaktion entspricht dann exemplarisch der Beispielgleichung:

B₂O₃ + 6 CH₃OH -> 2 B(OCH₃)₃ + 6 H₂O

Pro mol Bor (im Boroxid) werden also 3 mol Alkohol verbraucht.
Es werden also 2,499 mol Methanol verbraucht entspricht 80,07g, dies entspricht bei einer Dichte von 0,79g/ml für Methanol 101,36ml Methanol. Wenn man 1 kg Bor in etwa 2 Litern Methanol suspendiert, dann entspricht dies 0,051% der eingesetzten Menge Alkohol, so dass Alkohol eindeuting im Überschuß, bezogen auf die oxidischen Verunreinigungen im Bor, eingesetzt wird.

Das Gleichgewicht lässt sich (wie an der Reaktionsgleichung erkennbar) auch dadurch in Richtung Ester verschieben, indem mit trockenem, möglichst wasserfreiem Alkohol und einer möglichst wasserfreien Säure gearbeitet wird. Vorteilhaft wird außerdem das entstehende Wasser aus dem Kondensat entfernt, ebenso wie der entstehende Ester.
Dies kann bewirkt werden, indem beim Sieden unter Rückflusskühlung das Kondensat, also der Rücklauf vor der Rückführung in das Reaktionsgemisch, über mindestens ein Alkali- oder Erdalkalioxid und mindestens ein Alkali- oder Erdalkalihydroxid geleitet wird. Vorteilhaft geeignet sind hier eine Mischung aus Calciumhydroxid und Calciumoxid.
Dies bewirkt zweierlei: einerseits wird das in der Reaktion entstehende Wasser durch das Alkali- oder Erdalkalioxid gebunden, andererseits wird der entstehende, flüchtige Borsäureeester vor allem durch das Alkali- oder Erdalkalihydroxid verseift und verbleibt als unlösliche Sauerstoffverbindung auf den eingesetzten Alkali/Erdalkalioxiden und -hydroxiden. Die Entfernung von Wasser aus der Suspension wird ferner durch Zugabe eines geeigneten Schleppmittels, welches mit Wasser Azeotrope bildet unterstützt. Geeignet sind beispielsweise Ethanol, tert.-Butanol, 1,2-Dichlorethan, Diethylether, Ethylformiat, Hexan oder Ethylbuthylether, bei der Verwendung von Methanol kommt vorzugsweise Hexan oder Ethylformiat zum Einsatz.
Vorzugsweise wird diese Reaktion, das Kochen unter Rückfluß, so lange durchgeführt, bis kein Bor mehr in der flüssigen Phase des Reaktionsgemisches nachweisebar ist. Hierzu wird eine Probe aus dem Reaktor genommen, der Feststoff abgetrennt und der Alkohol verbrannt. Sobald die Farbe keine charakteristische Grünfärbung mehr zeigt ist die Reaktion beendet.
Anschließend wird der Feststoff durch Filtrieren, Zentrifugieren oder Abdestillieren der Flüssigkeit abgetrennt. Wird die Flüssigkeit abdestilliert, findet jedoch keine Entfernung von chlorid-, fluorid-, oder eisenhaltigen Verunreinigungen statt, da die jeweiligen Verunreinigungen nicht flüchtig genug sind.
Da immer noch Sauerstoff auf der Oberfläche der Borpartikel chemisorbiert vorliegt, sind auch noch Estergruppen an der Oberfläche gebunden. Diese werden durch die nachfolgende Wärmebehandlung unter vermindertem Druck ausgetrieben, wobei eine zu hohe Temperatur oder ein zu hoher Druck dazu führt, dass die flüchtigen Sauerstoffverunreinigungen, die noch in Form des Esters vorliegen, in nichtflüchtige Sauerstoffverunreinigungen umgewandelt werden, was unerwünscht ist.
Daher wird das Verfahren vorteilhaft im Vakuum, insbesondere bei einem Druck von maximal 10⁻³ mbar, vorzugsweise nicht mehr als 10⁻⁴ mbar durchgeführt.
Im Vakuum wird langsam, mit einer Aufheizrate von meist etwa 1°C/Minute bis auf 1000°C, vorteilhaft 400°C erwärmt, wobei bei einer zu starken Druckerhöhung durch abdampfende Sauerstoffverunreinigungen die Aufheizrate verringert wird.
Die Wärmebehandlung im Vakuum wird bei der jeweiligen Endtemperatur, welche im Allgmeinen bei 1000°C, vorteilhaft 400 °C liegt, über eine Zeit von 1 bis 3 Stunden fortgesetzt. Nach der Wärmebehandlung wird unter einer Inertgasatmosphäre, die verschieden von Stickstoff sein muß, vorzugsweise Argon oder Helium, abgekühlt. Die Erfindung betrifft außerdem gereinigtes Bor erhältlich nach dem Verfahren gemäß der Erfindung. Nach diesem letzten Schritt der Wärmebehandlung liegt eine vollständig gereinigte und sehr reaktive Oberfläche vor, die mit Magnesium-Metall besonders gut reagiert. Das gereinigte elementare Bor aufweist einen Borgehalt von mindestens 96,8 Gew.-%, einen Satierstoffgehalt von maximal 1,6 Gew.-%, einen Stickstoffgehalt von maximal 0,2 Gew.-%, eine Kristallinität von 30 Gew.-% oder weniger und eine Teüchengrößenverteilung mit einem d100-Wert von 9 µm oder weniger, vorteilhaft 6 µm oder weniger. Der Gehalt an anionischen Verunreinigungen beträgt maximal 0,4 Gew.-%, wobei Chlorid oder Fluorid in Mengen von maximal jeweils 0,2 Gew.-% vorhanden sind. Das Bor nach der Erfindung enthält maximal 1,0 Gew.-%, bevorzugt 0,8 Gew.-% metallische Verunreinigungen, wobei es sich meist um Alkali- oder Erdalkalimetall oder ein Metall der vierten Periode des Periodensystems der Elemente handelt. Diese können als Verunreinigungen elementar oder ionisch vorliegen. Der Gehalt an Alkalimetall beträgt maximal 0,4 Gew.-%, vorteilhaft maximal 0,3 Gew.-%., Meist handelt es sich hierbei um Kalium und/oder Magnesium, wobei Kalium in Mengen von weniger als 0,3 Gew.-% und Magnesium in Mengen bis zu 0,4 Gew.-% vorhanden sein können.
Das Metall der vierten Periode des Periodensystems der Elemente ist in Mengen von maximal 0,2 Gew.-%, vorteilhaft maximal 0,1 Gew.-%, vorhanden; im Allgemeinen handelt es sich hierbei um Eisen.

### Beispiele

Als Ausgangsprodukt wurden jeweils ca. 1 kg handelsübliches Bor, Grade I der Firma H.C. Starck verwendet. Das Bor wurde auf zwei verschiedene Weisen in einer methanolischen Suspension (jeweils 1 kg Bor auf ca.2 L Methanol) gemahlen, "Bor a" in einem Attritor und "Bor b" in einer Rührwerkskugelmühle,
Danach wurden beide Suspensionen auf gleiche Weise weiterverarbeitet. 2 L Suspension werden zunächst 100ml Hexan hinzugefügt. Die Suspension wird durch Einleiten von HCl-Gas mit HCl unter Rühren gesättigt. Sodann wird die Suspension unter Rückfluß ca. 10 h gekocht und das Kondensat des Rücklaufs über eine Kontaktmasse bestehend aus einem Teil Calciumoxid und einem Teil Calciumhydroxid geleitet. Nach Passage der Kontaktmasse fließt das Kondensat wieder in die siedende Suspension zurück. Nach Beendigung der Reaktion läßt man auf Raumtemperatur abkühlen und führt eine Fest-Flüssig Trennung der Suspension mittels einer handelsüblichen Zentrifuge durch. Der entstehende Feststoff wird nochmal mit frischem, mittels bekannter Verfahren von Wasser befreitem Methanol gewaschen und mittels bekannter Verfahren dergestalt getrocknet, daß ein schüttbares Pulver zurückbleibt. Dieses Pulver wird nun der Vakuumbehandlung zugeführt. Dazu wird es in eine Vakuumofen verbracht und mit 1°C pro Minute auf 400°C erwärmt. Überschreitet der Druck im Ofen dabei etwa 10⁻⁴ mbar, wird die Aufheizrate verringert, bis der Druck im Ofen wieder unter 10⁻⁴ mbar abgesunken ist. Sind 400°C erreicht, beläßt man noch drei weitere Stunden bei dieser Temperatur, füllt den Ofen dann mit Argon und läßt abkühlen. Das dabei entstehende Bor wird nur noch unter Schutzgas (hier Argon) gehandhabt.

Nach der Reinigung wurde festgestellt, dass der Magnesiumgehalt von 0,58 Gew.-% auf 0,46 Gew.-% und der Sauerstoffgehalt von 1,8 Gew.-% auf 1,6 Gew.-% verringert werden konnte.

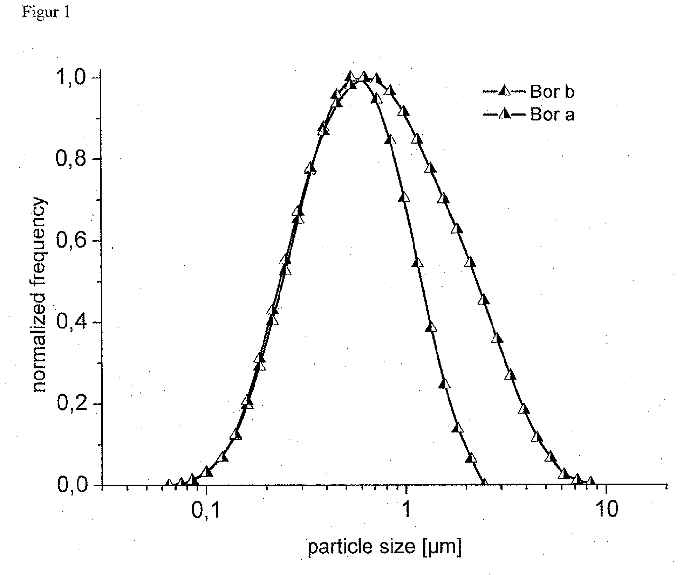

Die Teilchengrößenverteilungen wurden durch Fraunhofer-Beugung bestimmt mit einem Gerät Mastersizer S. Figur 1 zeigt die Teilchengrößenverteilungen von reinem Bor gemäß der Erfindung, weiche wie oben beschrieben im Attritor und in einer Rührwerkskugelmühle gemahlen wurden.

Aus dem Bor gemäß der Erfindung wurde Magnesiumdiborid hergestellt und hieraus supraleitende Drähte hergestellt. Gegenüber dem handelsüblichen Bor Grade I war die Stromtragfähigkeit bei geringem Feld um den Faktor 1,1, bei hohem Feld (größer 3 Tesla) mehr als zehnmal größer.

## Patentansprüche

1. Verfahren zur Reinigung von elementarem Bor enthaltend die folgenden Schritte:
- Bereitstellen von elementarem Bor;
- Mahlen des elementarem Bors in Gegenwart eines Alkohols, um eine erste Suspension zu erhalten;
- Versetzen der ersten Suspension mit einer im Alkohol löslichen starken Säure um eine zweite Suspension zu erhalten;
- Erhitzen der zweiten Suspension zum Sieden unter Rückflusskühlung, um eine dritte Suspension zu erhalten;
- Abtrennen des in der Suspension vorhandenen Feststoffes;
- Wärmebehandlung des Feststoffes im Vakuum unter einem Druck von maximal 10⁻³ mbar.

2. Verfahren nach Anspruch 1, wobei das Mahlen in einem Attritor oder eine Rührwerkskugelmühle durchgeführt wird.

3. Verfahren nach Anspruch 1 oder 2, wobei der Alkohol Methanol ist.

4. Verfahren nach einem oder mehreren der Ansprüche 1 bis 3, wobei die starke Säure und/oder der Alkohol wasserfrei sind.

5. Verfahren nach einem oder mehreren der Ansprüche 1 bis 4, wobei die starke Säure gasförmiger Chlorwasserstoff oder Toluolsulfonsäure ist.

6. Verfahren nach einem oder mehreren der Ansprüche 1 bis 5, wobei für eine Zeit von 1 bis 24 Stunden unter Rückfluß erhitzt wird.

7. Verfahren nach einem oder mehreren der Ansprüche 1 bis 6, wobei der Alkohol im Überschuß, bezogen auf das aus dem Sauerstoffgehalt berechenbare Boroxidäquivalent eingesetzt wird.

8. Verfahren nach einem oder mehreren der Ansprüche 1 bis 7, wobei beim Sieden unter Rückflusskühlung der Rücklauf über mindestens ein Alkali- oder Erdalkalioxid und mindestens ein Alkali- oder Erdalkalihydroxid geleitet wird.

9. Verfahren nach einem oder mehreren der Ansprüche 1 bis 8, wobei der Feststoff durch Filtrieren, Zentrifugieren oder Abdestillieren der Flüssigkeit abgetrennt wird.

10. Verfahren nach einem oder mehreren der Ansprüche 1 bis 9, wobei die Wärmebehandlung im Vakuum bei einem Druck von nicht mehr als 10⁻⁴ mbar durchgeführt wird.

11. Verfahren nach einem oder mehreren der Ansprüche 1 bis 10, wobei die Wärmebehandlung im Vakuum bei einer Maximaltemperatur von 1000°C, vorteilhaft 400°C, durchgeführt wird.

12. Verfahren nach einem oder mehreren der Ansprüche 1 bis 11, wobei die Wärmebehandlung im Vakuum eine Wärmebehandlung bei einer Temperatur von 400 °C über eine Zeit von 1 bis 3 Stunden beinhaltet.

13. Verfahren nach einem oder mehreren der Ansprüche 1 bis 12, wobei nach der Wärmebehandlung unter Inertgasatmosphäre, vorzugsweise Argon oder Helium, abgekühlt wird.

14. Elementares Bor, erhältlich nach einem Verfahren nach einem oder mehreren der Ansprüche 1 bis 13.

15. Verwendung von Bor nach Anspruch 14 zur Herstellung von Magnesiumdiborid, welches zur Herstellung von supraleitenden Formkörpern wie supraleitenden Sinterkörpern oder Drähten verwendet wird.

## Claims

1. Method for purifying elemental boron, comprising the following steps:
- provision of elemental boron;
- grinding of the elemental boron in the presence of an alcohol in order to obtain a first suspension;
- admixing the first suspension with a strong acid that is soluble in the alcohol in order to obtain a second suspension;
- heating the second suspension to boiling with reflux cooling in order to obtain a third suspension;
- separating off the solid present in the suspension;
- heat-treating the solid in vacuo at a pressure of at most 10⁻³ mbar.

2. Method according to Claim 1, where the grinding is carried out in an attritor or a stirred ball mill.

3. Method according to Claim 1 or 2, where the alcohol is methanol.

4. Method according to one or more of Claims 1 to 3, where the strong acid and/or the alcohol are anhydrous.

5. Method according to one or more of Claims 1 to 4, where the strong acid is gaseous hydrogen chloride or toluenesulfonic acid.

6. Method according to one or more of Claims 1 to 5, where heating is carried out for a period from 1 to 24 hours under reflux.

7. Method according to one or more of Claims 1 to 6, where the alcohol is used in excess, based on the boron oxide equivalent that can be calculated from the oxygen content.

8. Method according to one or more of Claims 1 to 7, where, upon boiling with reflux cooling, the reflux is passed over at least one alkali metal oxide or alkaline earth metal oxide and at least one alkali metal hydroxide or alkaline earth metal hydroxide.

9. Method according to one or more of Claims 1 to 8, where the solid is separated off by filtration, centrifugation or distilling off of the liquid.

10. Method according to one or more of Claims 1 to 9, where the heat treatment is carried out in vacuo at a pressure of not more than 10⁻⁴ mbar.

11. Method according to one or more of Claims 1 to 10, where the heat treatment is carried out in vacuo at a maximum temperature of 1000°C, advantageously 400°C.

12. Method according to one or more of Claims 1 to 11, where the heat treatment in vacuo involves a heat treatment at a temperature of 400°C over a period from 1 to 3 hours.

13. Method according to one or more of Claims 1 to 12, where, after the heat treatment, cooling is carried out under an inert gas atmosphere, preferably argon or helium.

14. Elemental boron obtainable by a method according to one or more of Claims 1 to 13.

15. Use of boron according to Claim 14 for producing magnesium diboride, which is used for producing superconductive shaped bodies such as superconductive sintered bodies or wires.

## Revendications

1. Procédé de purification de bore élémentaire contenant les étapes suivantes :
- la préparation de bore élémentaire ;
- le broyage du bore élémentaire en présence d'un alcool afin d'obtenir une première suspension ;
- le mélange de la première suspension avec un acide fort soluble dans l'alcool afin d'obtenir une deuxième suspension ;
- le chauffage de la deuxième suspension à l'ébullition à reflux afin d'obtenir une troisième suspension ;
- la séparation du solide présent dans la suspension ;
- le traitement thermique du solide sous vide sous une pression d'au plus 10⁻³ mbar.

2. Procédé selon la revendication 1, dans lequel le broyage est réalisé dans un attritionneur ou un broyeur à billes et à agitateur.

3. Procédé selon la revendication 1 ou 2, dans lequel l'alcool est le méthanol.

4. Procédé selon une ou plusieurs des revendications 1 à 3, dans lequel l'acide fort et/ou l'alcool sont anhydres.

5. Procédé selon une ou plusieurs des revendications 1 à 4, dans lequel l'acide fort est le chlorure d'hydrogène gazeux ou l'acide toluène-sulfonique.

6. Procédé selon une ou plusieurs des revendications 1 à 5, dans lequel le chauffage à reflux est réalisé pendant une durée de 1 à 24 heures.

7. Procédé selon une ou plusieurs des revendications 1 à 6, dans lequel l'alcool est utilisé en excès, par rapport à l'équivalent d'oxyde de bore pouvant être calculé à partir de la teneur en oxygène.

8. Procédé selon une ou plusieurs des revendications 1 à 7, dans lequel lors de l'ébullition à reflux, le reflux est conduit sur au moins un oxyde alcalin ou alcalino-terreux et au moins un hydroxyde alcalin ou alcalino-terreux.

9. Procédé selon une ou plusieurs des revendications 1 à 8, dans lequel le solide est séparé par filtration, centrifugation ou distillation du liquide.

10. Procédé selon une ou plusieurs des revendications 1 à 9, dans lequel le traitement thermique sous vide est réalisé à une pression non supérieure à 10⁻⁴ mbar.

11. Procédé selon une ou plusieurs des revendications 1 à 10, dans lequel le traitement thermique sous vide est réalisé à une température maximale de 1 000 °C, avantageusement de 400 °C.

12. Procédé selon une ou plusieurs des revendications 1 à 11, dans lequel le traitement thermique sous vide comprend un traitement thermique à une température de 400 °C pendant une durée de 1 à 3 heures.

13. Procédé selon une ou plusieurs des revendications 1 à 12, dans lequel un refroidissement est réalisé après le traitement thermique sous une atmosphère de gaz inerte, de préférence d'argon ou d'hélium.

14. Bore élémentaire, pouvant être obtenu par un procédé selon une ou plusieurs des revendications 1 à 13.

15. Utilisation de bore selon la revendication 14 pour la fabrication de diborure de magnésium, qui est utilisé pour la fabrication de corps moulés supraconducteurs tels que des corps frittés ou des fils supraconducteurs.
